# EUROPÄISCHE PATENTSCHRIFT

(11) **EP 2 614 018 B1**
(45) Veröffentlichungstag und Bekanntmachung des Hinweises auf die Patenterteilung: **06.08.2014**
(21) Anmeldenummer: 11745964.4
(22) Anmeldetag: 16.08.2011
(51) Int. Cl.: B65G 19/02

(54) **HÄNGEFÖRDERANLAGE und TRANSPORT-ADAPTER DAFÜR**
SUSPENSION CONVEYOR SYSTEM and TRANSPORT ADAPTER THEREFOR
INSTALLATION DE CONVOYEUR SUSPENDU et ADAPTATEUR DE TRANSPORT ASSOCIÉ

(30) Priorität: 08.09.2010 DE 102010045725
(43) Veröffentlichungstag der Anmeldung: 17.07.2013
(73) Patentinhaber: SSI Schäfer Peem GmbH, 8051 Graz-Gösting (AT)
(72) Erfinder: WINKLER, Max, A-8010 Graz (AT)
(74) Vertreter: Witte, Weller & Partner Patentanwälte mbB
(86) Internationale Anmeldenummer: PCT/EP2011/064090
(87) Internationale Veröffentlichungsnummer: WO 2012/031857

(56) Entgegenhaltungen:
- WO-A2-2004/028929
- DE-A1- 3 136 732
- DE-A1- 3 917 630
- DE-A1- 10 309 186

## Beschreibung

Die vorliegende Erfindung betrifft einen Transport-Adapter für eine Hängeförderanlage, eine Hängeförderanlage sowie eine Querverschiebungs-Weiche für eine Hängeförderanlage, mit der Hängewaren ohne größeren Aufwand in Abzweigungen überführt werden können, die auch mit einem Winkel von größer oder gleich 90° zu einer Hauptförderstrecke orientiert sind.

Das Dokument DE 31 36 732 A1 offenbart eine Einrichtung zum Fördern von Teilen, insbesondere Werkstücken, die mit auf einer Förderbahn aufliegenden und geführten Tragelementen versehen ist, welche das Fördergut hängend tragen. Die Förderbahn ist gebildet durch ein von Montagestraßen her bekanntes Doppelgurt-Förderband, auf welchem die Tragelemente aufliegen und durch Haftreibungsschluss mitbewegt werden. Zum Anhalten der Tragelemente an bestimmten Stellen wird der Reibungsschluss zwischen den Tragelementen und dem Doppelgurt-Förderband aufgehoben. Diese Einrichtung ist wesentlich einfacher als ein herkömmlicher Kettenförderer (Power-and-Free-Anlage) und kann auch zum Fördern von kleinen und leichten Teilen wirtschaftlich eingesetzt werden.

Das Dokument WO 2004/028929 A2 offenbart eine Antriebstransfervorrichtung mit einer Führung, die einen Antriebstransferweg definiert; und mit einer Vielzahl von Antriebstransfergliedern, die verliersicher in der Führung beweglich sind, wobei die Antriebstransferglieder den Antrieb zwischen diskreten Teilen der Führung transferieren können. Die Führung weist ein Paar von Führungsabschnitten auf, die beabstandet zueinander angeordnet sind, um dazwischen einen Kanal zu definieren. Die Antriebsführungsglieder sind verliersicher im Kanal beweglich. Der Kanal lässt einen Zugriff auf eines oder mehrere der Antriebstransferglieder zu.

Das Dokument DE 3917630 A1 offenbart einen Transport-Adapter mit den Merkmalen des Oberbegriffs des Anspruchs 1, und beschreibt eine Vorrichtung zum hängenden Transport von Gegenständen, insbesondere Kleidungsstücken, durch eine Behandlungseinrichtung. Der Transport erfolgt üblicherweise in unterschiedlichen Relativpositionen der Kleidungsstücke zur Förderrichtung. Der Richtungswechsel der Kleidungsstücke erfordert dazu bei bekannten Vorrichtungen unterschiedlich ausgebildete Fördereinrichtungen entlang der Förderstrecke. Dies bereitet bei der Übergabe der Bügel von einer Fördereinrichtung zur anderen Probleme. Vorliegend geht es um eine einfache, problemlose Umorientierung der Kleidungsstücke, in dem die Förderstrecke aus einer einzigen Führungsschienenbahn mit einer Mehrzahl daran verfahrbarer Schlitten zur Anhängung der sich auf den Bügeln befindlichen Kleidungsstücke besteht. Die Schlitten ermöglichen trotz einer einzigen Führungsschienenbahn eine Umorientierung der Richtung der Kleidungsstücke, und zwar ohne eine Umhängung von einer Förderrichtung zur anderen. Die Vorrichtung eignet sich besonders zum Hindurchtransportieren von zu glättenden Kleidungsstücken durch einen Tunnel.

Aus der DE 103 09 186 A1 ist eine Hängefördereinrichtung bekannt, bei der Fördergutträger gleitend längs einer Förderstrecke an einer Führungsschiene bewegbar sind. Ferner ist eine Weiche vorgesehen, an der eine Förderstrecke längs in eine weitere Förderstrecke einmündet.

Aus der DE 195 04 879 A1 ist ein Förderer mit sogenannten Transportgehängen bekannt, wobei jedes Transportgehänge einen entlang eines Tragprofils verfahrbaren Fahrwagen aufweist, wobei der Fahrwagen Tragelemente aufweist, die als Gleitkufen oder Röllchen ausgebildet sind.

Die DE 83 17 424 U1 zeigt eine Hängeschienenbahn zum Transport von Gütern, insbesondere zum Transport von Schlachttieren, die ein Schienenpaar aufweist, das einen Führungsschlitz bildet, wobei in den Führungsschlitz ein Lasthaken eingesetzt ist, der mit einer Tragscheibe versehen ist, die sich auf der Schienenoberseite abstützt.

In dem europäischen Patent EP 1 690 811 B1 wird ein herkömmliches Transportsystem für hängende Gegenstände offenbart. Das Transportsystem umfasst eine Transport-Schiene und eine Vielzahl von sog. Roll-Adaptern. Die Roll-Adapter werden verschieblich in die Schiene eingehängt und weisen eine aus der Schiene hervorstehende Haltevorrichtung auf, an der bspw. Kleiderbügel aufgehängt werden können. Die Roll-Adapter weisen an einem der Haltevorrichtung gegenüberliegenden Ende einen Mitnehmer auf, der in eine Antriebskette eingreift, die in der Schiene angeordnet ist. Der Roll-Adapter weist nur ein Laufrollenpaar auf, das pendelnd in der Schiene gelagert ist.

Um zu gewährleisten, dass die Roll-Adapter funktionstüchtig sind, werden im Verlauf der Förderstrecke immer wieder sog. Rollenprüfstationen vorgesehen. Dort können Roll-Adapter ausgeschleust, ausgetauscht und wieder eingeschleust werden. Beschädigte Roll-Adapter, insbesondere Rollen, stellen eine Gefahr dar. Beschädigte Roll-Adapter können den Warenfluss innerhalb der Förderanlage zum Stocken oder sogar Erliegen bringen, weil ein Weitertransport von unbeschädigten Roll-Adaptern verhindert wird. So können z.B. Fragmente eines beschädigten Roll-Adapters in der Schiene liegenbleiben und so zu einem Stocken des Warenflusses führen, z.B. wenn es zu einer mechanischen Blockade innerhalb der Schiene kommt.

Des Weiteren umfassen vorbekannte Hängeförderanlagen häufig Leeradaptermagazine. Ein Leeradaptermagazin dient zum Sammeln von vorübergehend nicht benutzten (leeren) Roll-Adaptern, die in eine Art Sammelwanne fallengelassen werden. Am Boden dieser Wanne ist eine Schüttelrinne angeordnet, um ungenutzte Roll-Adapter durch Rütteln auszurichten und wieder in den Förderstreckenkreislauf zurückzuführen, d.h. in die Schiene einzuschleusen.

Da die Roll-Adapter aufgrund der Rollen ein nicht unbeachtliches Gewicht haben und da die Wanne ausreichend groß dimensioniert sein muss, um ggf. auch mehrere tausend Roll-Adapter aufnehmen zu können, können die Roll-Adapter beim Ausschleusen aus der Förderstrecke beschädigt werden, wenn sie in eine nahezu leere Wanne fallen oder ungünstig auf einen anderen Roll-Adapter fallen, der bereits in der Wanne liegt. Ist die Wanne voll, so wird ein großer Druck auf solche Roll-Adapter ausgeübt, die in der Wanne unten liegen, nämlich durch das Gewicht der darüberliegenden Roll-Adapter. Diese Bedingungen tragen dazu bei, dass die Roll-Adapter, und insbesondere ihre Laufrollen, schnell verschleißen und leicht zu Bruch gehen. Deshalb ist es möglich, dass ein Roll-Adapter zu Bruch geht, während er sich in der Förderstrecke befindet. Dies erhöht wiederum die Gefahr eines Staus in der Förderanlage.

Da die Laufrollen der Roll-Adapter, die sich im Wesentlichen in einer Lauf- bzw. Förderrichtung erstrecken, eine nicht unerhebliche Länge (Durchmesser) aufweisen, können die Roll-Adapter nur über langgezogene, gekrümmte Abzweigungen aus der Hauptförderstrecke ausgeschleust werden. Die Größe der Laufrollen bestimmt einen minimalen Radius einer Abzweigung. Entsprechende Winkel liegt üblicherweise in einer Größenordnung von 10° bis 40°.

Es ist daher eine Aufgabe der vorliegenden Erfindung, einen Hängeförderanlagen-Adapter, eine Hängeförderanlage sowie eine Hängeförderanlagenweiche vorzusehen, die die zuvor beschriebenen Nachteile überwindet.

Diese Aufgabe wird mit einem Transport-Adapter für eine Hängeförderanlage mit einem Grundkörper gemäß Anspruch 1 gelöst.

Dies erleichtert die Herstellung, insbesondere wenn der Grundkörper spritzgegossen wird. Beim Spritzgießen werden bevorzugt Kunststoffe eingesetzt. Die Kunststoffe sollten einen möglichst geringen Gleitwert aufweisen (0,2 oder kleiner), so dass die auf einer Förderstrecke erforderlichen Gefälle möglichst gering gehalten werden können (vorzugsweise weniger als 6 % Gefälle).

Erfindungsgemäß ist der Mitnehmerabschnitt derart gestaltet, dass die Bewegung (Mitnahme) des Adapters entlang einer Haupt-Förderrichtung und quer (seitlich) dazu, vorzugsweise beliebig schräg zur Haupt-Förderrichtung, erfolgen kann.

Weiterhin weist der Gleitkörper erfindungsgemäß eine Oberseite, die dem Mitnehmerabschnitt zugewandt ist, und eine Unterseite, die dem Führungsabschnitt zugewandt ist, auf, wobei die Oberseite und die Unterseite zur gleitend verschieblichen Lagerung in einem Zwischenraum in Profilelementen der Schiene ausgebildet sind.

Der Transport-Adapter der vorliegenden Erfindung verzichtet vollständig auf Laufrollen. Dadurch reduziert sich das Gewicht. Außerdem reduziert sich die Anfälligkeit des Adapters gegenüber Beschädigungen. Damit reduziert wiederum sich die Gefahr von Materialflussstauungen in der (Hänge-)Förderanlage.

Leere, d.h. zeitweise nicht benutzte Adapter können ohne Probleme in eine Sammeleinrichtung der oben erwähnten Art abgegeben, sogar abgeworfen, werden, ohne Gefahr zu laufen, den Adapter ernsthaft zu beschädigen.

Der Adapter ist in seiner Ausführung einfach und weist keine unnötigen Zusatzkomponenten, wie z.B. Rollen und zugehörige Lager, auf, die einen Zusammenbau und eine Wartung der Adapter erschweren. Die Produktionskosten sind entsprechend niedriger. Die Herstellung der Adapter ist erheblich leichter.

Die Adapter der vorliegenden Erfindung sind widerstandsfähiger, verschleißärmer und kostengünstiger.

Des Weiteren ermöglicht der Adapter gemäß der Erfindung den Einsatz von Hängeförderanlagen-Weichen (nachfolgend auch nur "Weichen" bezeichnet), die einen (Anfangs-) Winkel von mehr als 40° zu einer Haupt-Förderrichtung einschließen. Vorzugsweise können Adapter in Winkeln von größer oder gleich 90° ausgeschleust werden. Diese große Flexibilität bei der Streckenführung im Zusammenhang mit Abzweigungen ist auf die Geometrie des Führungsabschnitts des Adapters zurückzuführen. Der Führungsabschnitt weist einen runden, vorzugsweise kreisrunden, Querschnitt (Schnitt senkrecht zur Längsachse) bzw. eine entsprechend ausgebildete Grundfläche auf. Anders als die herkömmlichen Roll-Adapter, die im Bereich, wo der Roll-Adapter aus der Schiene vorsteht, einen rechtwinkligen Querschnitt aufwiesen, können mit dem runden Querschnitt des Adapters der vorliegenden Erfindung Ausschleusungen in nahezu jedem beliebigen Winkel erfolgen. Die Gefahr, dass ein Adapter am Ort der Weiche aneckt oder mechanisch blockiert, d.h. hängen bleibt, besteht nicht. Ein Planer (Layouter) für Förderanlagen ist also hinsichtlich einer Streckenführung vollkommen frei. Eine Abzweigung kann an jedem beliebigen Ort unter jedem beliebigen Winkel erfolgen. Dies stellt eine erhebliche Erleichterung beim Entwerfen einer Hängeförderanlage dar.

Das Ausschleusen kann dadurch deutlich vereinfacht werden, dass der Mitnehmerabschnitt sowohl in der Haupt-Förderrichtung als auch, etwa beim seitlichen Ausschleusen, seitlich dazu mitgenommen werden kann. Mit anderen Worten kann der Mitnehmerabschnitt etwa in beliebiger Richtung eine definierte Angriffsfläche zur Mitnahme durch ein Zugmittel bereitstellen.

Es versteht sich dabei, dass eine Bewegungsmitnahme im Wesentlichen in beliebiger Richtung entlang einer (Transport-)Ebene erfolgen kann. Die Ebene kann grundsätzlich einen horizontalen und/oder geneigten Verlauf aufweisen.

Der Gleitkörper mit seiner Oberseite und Unterseite kann etwa von einer Schiene mit zumindest teilweise U-förmigem Querschnitt beidseitig umgriffen werden. Auf diese Weise kann sich eine ausgezeichnete Führung in der Schiene ergeben, Somit kann etwa ein "Kippeln" der Adapter in der Schiene beim Beschleunigen oder Verzögern weitgehend vermieden werden.

Vorzugsweise erstreckt sich der Mitnehmerabschnitt in der Längsrichtung, schließt sich an den Gleitabschnitt an und stellt vorzugsweise eine Fortsetzung des Führungsabschnitts dar, die durch den Gleitabschnitt unterbrochen ist.

Eine derartig geometrische Ausbildung des Adapters erleichtert eine Herstellung eines Spritzgusswerkzeugs zur Herstellung des Adapters selbst. Der Adapter ist in sich stabil. Strukturelle Schwachstellen werden vermieden. Sollbruchstellen sind nicht vorhanden. Ein derartiger Adapter ist langlebig und verschleißarm.

Weiter ist es von Vorteil, wenn der Gleitkörper eine im Wesentlichen rechteckige, vorzugsweise quadratische, Grundfläche aufweist. Eine rechteckige Ausbildung der Grundfläche des Gleitkörpers hat den Vorteil, dass die Adapter beim Einführen in eine Schiene der Hängeförderanlage kaum bis gar nicht ausgerichtet werden müssen, damit sie in die Schiene passen. Innerhalb der Schiene können sich solche Adapter, die hintereinander angeordnet sind, mit einer großen Fläche berühren. Das hat den Vorteil, dass, wenn ein stromabwärts angeordneter Adapter unbeabsichtigt außer Eingriff mit dem Zugmittel kommt, nachfolgende Adapter den in diesem Moment ohne Antrieb ausgestatteten Adapter innerhalb der Schiene weiter befördern können. Sollte wider Erwarten doch einmal ein Adapter in einer Schiene kaputt gehen, kann die Randfläche als eine Art Rammbock eingesetzt werden, um Bruchstücke aus der Schiene, insbesondere dem Führungsspalt, zu schieben.

Es versteht sich, dass aber auch andere Grundformen (z.B. dreieckig, kreisrund, elliptisch, etc.) für die Grundfläche des Gleitkörpers möglich sind. Eine Größe der Grundfläche sollte so gewählt werden, dass ausreichend Fläche zur Kontaktierung mit der Schiene vorhanden ist. Die Grundfläche des Gleitkörpers ist üblicherweise mit Erhebungen versehen, um eine effektive Kontaktfläche zwischen dem Gleitkörper und der Schiene möglichst gering zu halten, da die (Gleit-) Reibung proportional zu der Kontaktfläche ist.

Weiter ist es bevorzugt, wenn der Gleitkörper eine Oberseite, die dem Mitnehmerabschnitt zugewandt ist, eine Unterseite, die dem Führungsabschnitt zugewandt ist, und eine umlaufende Randfläche aufweist, die die Oberseite mit der Unterseite verbindet, wobei die Unterseite und/oder die Oberseite jeweils mindestens einen Vorsprung aufweist, der sich im Wesentlichen in der Längsrichtung erstreckt.

Diese Vorsprünge bzw. Erhebungen reduzieren die effektive Kontaktfläche zwischen dem Gleitkörper und der Schiene. Auf diese Weise können Gleitwerte erreicht werden, die nahe solchen Gleitwerten liegen, wie sie bei Roll-Adaptern vorkommen, die wiederum im Wesentlichen durch die Gleitwerte (üblicherweise 0,1 bis 0,15) ihrer Kugellager bestimmt sind.

Bei einer weiteren vorteilhaften Ausgestaltung sind mehrere Vorsprünge vorgesehen, die relativ zur Grundfläche des Gleitkörpers, vorzugsweise homogen, um eine jeweilige Verbindung zwischen dem Gleitabschnitt, dem Führungsabschnitt und/oder dem Mitnehmerabschnitt verteilt angeordnet sind.

Je homogener die Vorsprünge verteilt sind, desto gleichmäßiger verteilt sich die Kraftübertragung zwischen dem Adapter und der Schiene. Eine gleichmäßige Kraftverteilung verursacht einen gleichmäßigen Verschleiß und erhöht somit die Lebensdauer des Adapters und der Schiene.

Insbesondere ist die Randfläche derart ausgebildet, dass mehrere Adapter, die in der Schiene hintereinander angeordnet sind und aneinander anschlagen, sich gegenseitig weiterbewegen können.

Auf diese Weise ist gewährleistet, dass Adapter, die außer Eingriff mit dem Zugmittel geraten, trotzdem innerhalb der Förderanlage weiterbewegt werden. Bruchstücke können entfernt, d.h. weggeschoben, werden.

Ferner kann es von Vorteil sein, wenn die eingesetzten Kunststoffe Teflonzusätze oder Ähnliches aufweisen. Der Gleitwert des Kunststoffs sollte zwischen 0,1 und 0,3 liegen und vorzugsweise 0,2 betragen.

Ferner wird die oben genannte Aufgabe mit einer Hängeförderanlage gemäß Anspruch 9 gelöst, die mindestens einen Transport-Adapter gemäß der vorliegenden Erfindung und eine Transport-Schiene aufweist, die zur gleitenden Aufnahme des mindestens einen Adapters eingerichtet ist. Die Hängeförderanlage umfasst ferner ein Zugmittel, das eingerichtet ist, mit dem Mitnehmerabschnitt des mindestens einen Adapters, zum Zwecke eines Transports des mindestens einen Adapters in oder auf der Schiene, in Eingriff zu kommen, wobei die Schiene zumindest ein erstes Profilelement, und vorzugsweise ein zweites Profilelement, aufweist, um einen Führungsspalt zu definieren, der zur Aufnahme des Führungsabschnitts des mindestens einen Adapters geeignet ist, so dass der Gleitabschnitt auf der Schiene aufliegt.

Vorzugsweise weist jedes Profilelement im Bereich des Kontakts mit dem Adapter zumindest einen L-förmigen Querschnitt auf, der zur Auflage und seitlichen Führung des Gleitabschnitts des Adapters eingerichtet ist, wobei der L-förmige Querschnitt einen weiteren Schenkel aufweist, so dass der Querschnitt dann U-förmig ist, wobei der weitere Schenkel derart zu einem Auflageschenkel beabstandet ist, dass der Gleitkörper des mindestens einen Adapters mit einem geringen Spiel in einen durch die Schenkel definierten Zwischenraum passt, so dass der Gleitkörper mit geringer Reibung auf oder in der Schiene gleitet.

Das Vorsehen eines U-förmigen Profils erhöht den Grad der Führung des Adapters in der Schiene. Dies reduziert wiederum die Gefahr, dass ein Adapter sich unbeabsichtigt aus der Schiene herausdrehen kann, da der Adapter sowohl an der Unterseite als auch an der Oberseite des Gleitkörpers durch die Schiene geführt ist.

Insbesondere ist die Schiene derart ausgebildet, dass sie das Zugmittel und jedes Profilelement umschließt.

Damit ist gewährleistet, dass von dem mindestens einen Adapter höchstens der Führungsabschnitt und der Halteabschnitt aus der Schiene hervorstehen, wenn sich der Adapter in der Schiene befindet.

Solche Teile des Adapters bzw. der Förderanlage, die sich im Wesentlichen während eines Transports des Adapters durch die Förderanlage bewegen, sind geschützt. Mitarbeiter, die in der Hängeförderanlage arbeiten, sind somit gegenüber körperlichen Verletzungen geschützt.

Bei einer weiteren besonderen Ausführungsform weist die Anlage zusätzlich ein Leeradaptermagazin auf, das derart ausgebildet ist, dass ungenutzte Adapter, die zeitweilig nicht zum hängenden Transport von Objekten benötigt werden, ungeordnet in das Magazin fallen, sobald sie die Schiene verlassen.

Da die Adapter gemäß der vorliegenden Erfindung keine Laufrollen aufweisen, reduziert sich das Gewicht des Adapters erheblich. Leeradapter, die in einem Leeradaptermagazin gesammelt werden, können sich somit nicht gegenseitig beschädigen. Das Sammeln vieler Leeradapter übereinander in dem Magazin verursacht keine Probleme aufgrund einer zunehmenden Gewichtskraft von oben auf die Adapter unten.

Ferner wird die oben genannte Aufgabe mit einer Hängeförderanlage gemäß einer Ausführungsform der Erfindung mit einer Querverschiebungs-Weiche gelöst, wobei die Weiche mindestens ein erstes, zweites und drittes Weichen-Profilelement aufweist, deren Querschnitte mit dem Querschnitt jedes entsprechenden Profilelements der restlichen Schiene übereinstimmt, wobei mindestens zwei der Weichen-Profilelemente aufeinander abgestimmte Eckabschnitte aufweisen, die derart ausgebildet sind, dass der mindestens eine Adapter direkt in einen abzweigenden Ast der Schiene verschiebbar ist, wobei die Weichen-Profilelemente am Ort der Weiche fest montiert sind.

Durch die runde Form des Führungsabschnitts des Adapters der Erfindung können die Adapter in Abzweigungen ausgeschleust werden, die mit der Hauptförderstrecke nahezu jeden beliebigen Winkel einschließen können. Dynamische Komponenten, wie z.B. durch einen seitlichen Versatz austauschbare Streckenabschnitte im Bereich der Weiche, entfallen. Die Weiche ist in diesem Sinne statisch. Auf dynamische Komponenten kann im Bereich der Weiche, insbesondere soweit die Schiene betroffen ist, vollständig verzichtet werden. Dies reduziert einen Steuerungsaufwand. Die Weiche ist langlebiger und benötigt weniger Wartung.

Hängeförderanlagen-Planer können den Streckenverlauf nahezu beliebig planen und müssen nicht darauf Rücksicht nehmen, dass eine Weiche eine nicht zu vernachlässigende Ausdehnung hat, bis aufgrund der erforderlichen Krümmung einer herkömmlichen Abzweigung ein gewünschter Abzweigungswinkel erreicht ist, und dass Abzweigungen nicht mit nahezu beliebigen Winkeln möglich sind.

Vorzugsweise schließt der abzweigende Ast einen Winkel α mit einer Haupt-Förderrichtung, die durch einen Verlauf der Transport-Schiene im Bereich der Weiche definiert ist, ein, der größer oder gleich 90° ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: in den Darstellungen A) bis E) einen Adapter gemäß der vorliegenden Erfindung aus verschiedenen Perspektiven;
- Fig. 2: eine Draufsicht auf den Adapter der Fig. 1;
- Fig. 3: eine Schnittansicht durch eine Hängeförderanlage, die eine Schiene umfasst, in der wiederum ein Adapter gemäß der vorliegenden Erfindung angeordnet ist;
- Fig. 4: eine Seitenansicht der Förderanlage der Fig. 3 mit verschiedenen Mitnehmerelementen;
- Fig. 5: eine Draufsicht auf eine herkömmliche Schiebeweiche mit einem Fingerförderer, bei denen Adapter gemäß der vorliegenden Erfindung eingesetzt werden; und
- Fig. 6: eine Draufsicht auf eine Querverschiebungs-Weiche gemäß der vorliegenden Erfindung.

Bei der nachfolgenden Beschreibung der Erfindung werden gleiche Teile und Merkmale mit gleichen Bezugszeichen versehen werden, wobei die in der gesamten Beschreibung enthaltenen Offenbarungen sinngemäß auf gleiche Teile und Merkmale mit gleichen Bezugszeichen übertragen werden können. Lageangaben wie z.B. oben, unten, seitlich, etc. sind auf die unmittelbar beschriebene Figur bezogen und bei einer Lageänderung sinngemäß auf die neue Lage zu übertragen.

In der nachfolgenden Beschreibung wird der erfindungsgemäße Transport-Adapter (nachfolgend auch kurz "Adapter" bezeichnet) unabhängig von seiner Ausgestaltung immer mit dem Bezugszeichen 10 bezeichnet werden. Der Adapter 10 dient als Kopplungselement für einen Transport von hängenden Waren, wie z.B. Kleidungsstücken auf Kleiderbügeln, an ein umlaufendes Fördermittel, wie z.B. eine umlaufende Förderkette, einer Förderanlage.

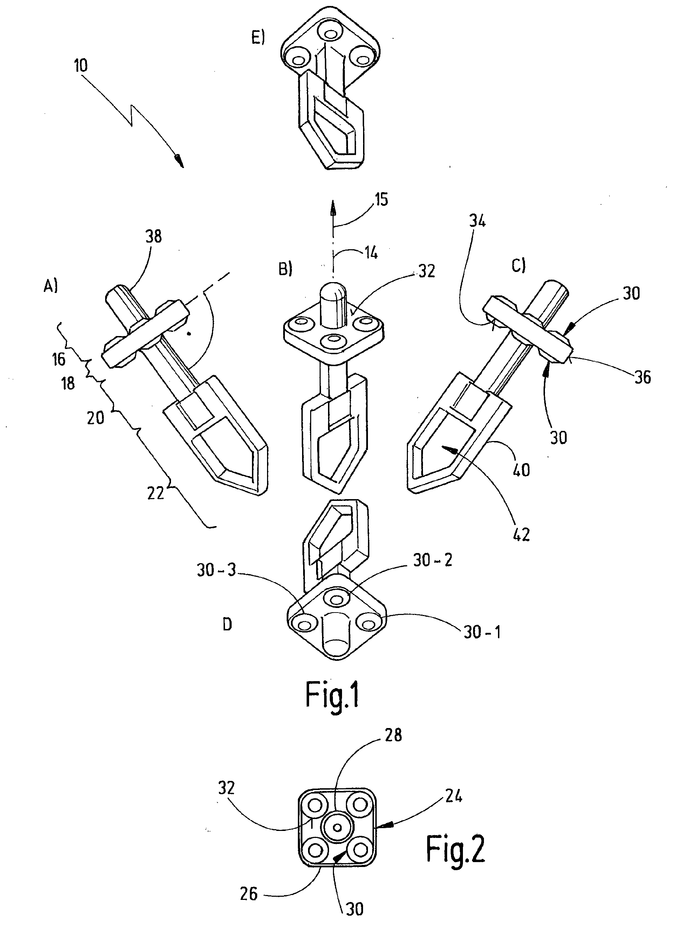

In den Figuren 1A bis 1E sind verschiedene Perspektiven einer ersten Ausführungsform des Adapters 10 der Erfindung gezeigt. Der Adapter 10 wird nachfolgend unter Bezugnahme auf alle Darstellungen der Figuren 1A bis 1E beschrieben.

Der Adapter 10 weist einen Grundkörper 12 auf, der vorzugsweise einstückig ausgebildet ist. Der Grundkörper 12 sollte aus einem Kunststoff mit guten Gleiteigenschaften hergestellt werden. Der Kunststoff sollte einen möglichst geringen Reibwert in der Größenordnung von 0,1 bis 0,3 (in Kombination mit einer späteren noch zu erläuternden Transport-Schiene) aufweisen. Der Adapter 10 der Erfindung weist keine Laufrollen wie herkömmliche Roll-Adapter auf.

Der Grundkörper 12 lässt sich in verschiedene, aneinandergrenzende und miteinander verbundene Abschnitte 16-22 aufteilen. Der Grundkörper 12 weist einen Mitnehmerabschnitt 16, einen Gleitabschnitt 18, einen Führungsabschnitt 20 und einen Halteabschnitt 22 auf, die sich entlang einer Längsachse 14 in einer Längsrichtung 15 erstrecken. Es versteht sich, dass der Führungsabschnitt 20 und der Halteabschnitt 22 (oder andere Abschnitte) auch durch einen einzigen Abschnitt realisiert sein können, indem der Führungsabschnitt 20 z.B. selbst eine Öffnung im Grundkörper 12 aufweist, die zur Aufnahme eines Kleiderbügels oder Ähnlichem geeignet ist, wie es nachfolgend noch näher beschrieben werden wird.

Der Gleitabschnitt 18 übernimmt beim Adapter 10 der Erfindung die Funktion der Laufrollen eines herkömmlichen Roll-Adapters, wie er einleitend beschrieben wurde.

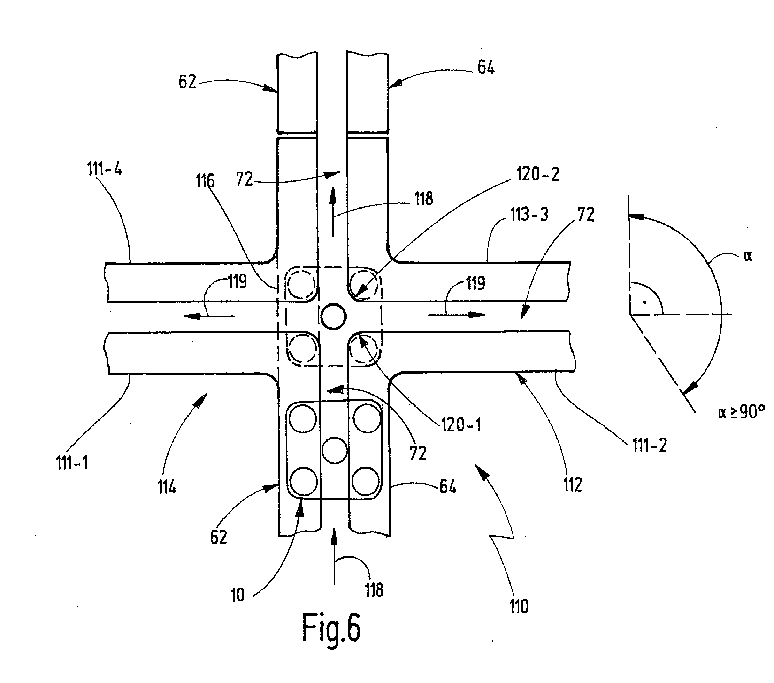

Fig. 2 zeigt eine Draufsicht auf den Adapter 10 der Fig. 1, wobei man entlang der Längsachse 14, die in der Fig. 2 senkrecht zur Zeichnungsebene orientiert ist, auf den Adapter 10, und insbesondere auf einen Gleitkörper 24 des Gleitabschnitts 18 liegt. Der Gleitkörper 24 des Gleitabschnitts 18 weist hier z.B. eine quadratische Grundfläche 26 mit einer vorzugsweise konstanten Höhe auf. In der Mitte der Grundfläche 26 ist eine Grundfläche 28 des Mitnehmerabschnitts 16 gezeigt. Der Mitnehmerabschnitt 16 ist bei der Ausführungsform des Adapters 10 der Fig. 1 zylinderförmig ausgebildet ist und bildet eine Fortsetzung des zylinderförmigen Führungsabschnitts 20. Dies bedeutet, dass eine hier nicht näher bezeichnete Grundfläche des Führungsabschnitts 20 mit der Grundfläche 28 des Mitnehmerabschnitts 16 übereinstimmt. Die Grundfläche 28 ist rund, vorzugsweise kreisrund. Sie kann aber auch bspw. oval ausgebildet sein. Die runde Grundform des Führungsabschnitts 20 ermöglicht ein Ausschleusen des Adapters 10 mit nahezu beliebigen Winkeln relativ zu einer Haupt-Förderrichtung, wie es im Zusammenhang mit der Fig. 6 noch genauer beschrieben werden wird. Der Führungsabschnitt 20 muss nicht über seine komplette Länge eine runde Grundfläche aufweisen. Es reicht, wen der Führungsabschnitt dort rund ist, wo er mit einem Führungsspalt zusammenwirkt.

Der Gleitkörper 24 erstreckt sich im Wesentlichen senkrecht zur Längsrichtung 15, wie es in Fig. 1A angedeutet ist. Es versteht sich, dass die Grundfläche 26 auch anders geformt sein kann. Die Grundfläche 26 kann z.B. auch rechteckig, kreisrund, oval, etc. ausgebildet sein. Rechtwinkligen Grundflächen haben den Vorteil, dass Adapter 10, die hintereinander angeordnet sind, eine gegenseitige flächige Kontaktierung zulassen, so dass benachbarte Adapter 10 sich gegenseitig anschieben können, wenn sie aneinanderstoßen.

Der Gleitkörper 24 des Gleitabschnitts 18 kann ferner Vorsprünge bzw. partielle Erhebungen 30 an seiner Oberseite 32 und/oder Unterseite 34 aufweisen. Die Oberseite 32 ist dem Mitnehmerabschnitt 16 zugewandt. Die Unterseite 34 ist dem Führungsabschnitt 20 zugewandt. Die Oberseite 32 und die Unterseite 34 sind durch eine senkrecht zu diesen Flächen orientierte Randfläche 36 voneinander beabstandet und miteinander verbunden.

In den Figuren 1 und 2 sind jeweils exemplarisch vier Vorsprünge 30 sowohl auf der Oberseite 32 als auch auf der Unterseite 34 gezeigt. Die Anzahl der Vorsprünge kann auf der Ober- und Unterseite unterschiedlich sein. Die gezeigten vier Vorsprünge 30 können jeweils homogen relativ zum Mitnehmerabschnitt 16 bzw. Führungsabschnitt 20 angeordnet sein. Der Mitnehmerabschnitt 16 weist hier einen dornartigen Fortsatz 38 auf, der dazu geeignet ist, mit einem hier nicht näher gezeigten Mitnehmer eines Fördermittels zusammenzuwirken, damit sich der Adapter 10 durch eine Förderanlage bewegen lässt.

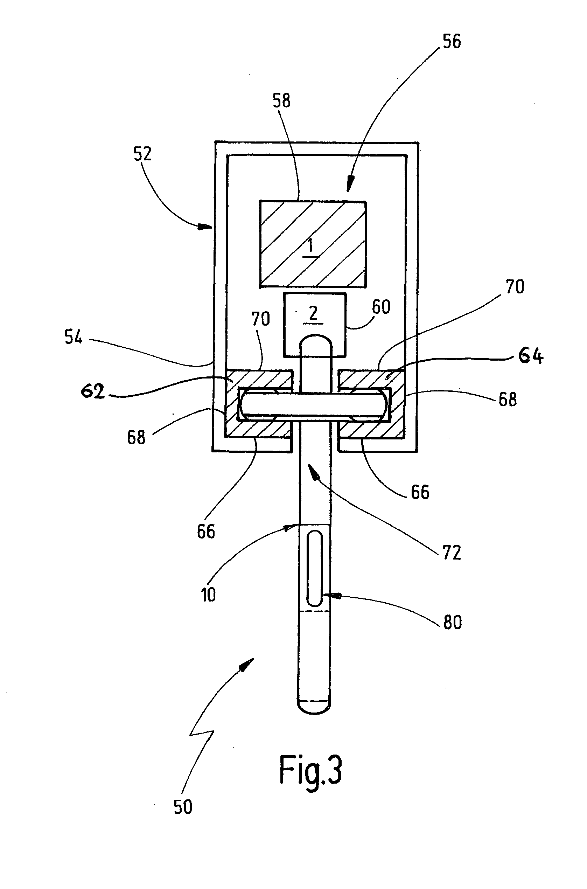

Je nachdem, ob die Oberseite 32 und/oder die Unterseite 34 mit einer nachfolgend noch näher im Zusammenhang mit der Fig. 3 zu erläuternden Transport-Schiene 52 während eines Bewegens des Adapters 10 in Berührung kommen, weisen entweder beide oder nur eine der Seiten 30 und 32 Vorsprünge 30 auf. Die Vorsprünge 30 verringern die effektive Kontaktfläche zwischen dem Gleitkörper 24 des Mitnehmerabschnitts 16 und der Transport-Schiene 52. Da die Kontaktfläche linear in die Reibung eingeht, ist es von Vorteil, wenn die effektive Kontaktfläche zwischen dem Adapter 10 und der Schiene 52 so klein wie möglich ist.

Die Vorsprünge 30 weisen hier exemplarisch eine kegelstumpfähnliche Form mit einer kreisrunden Grundfläche auf, wobei sich die Vorsprünge 30 hier konisch mit zunehmender Entfernung vom Gleitkörper 24 des Gleitabschnitts 18 verjüngen. Die tatsächlichen Kontaktflächen der Vorsprünge 30 sind ebenfalls kreisförmig. Es versteht sich, dass die Form der Vorsprünge 30 sowie die Verteilung der Vorsprünge 30 relativ zur Grundfläche 26 des Gleitkörpers 24 beliebig wählbar ist. Eine homogene Verteilung der Vorsprünge 30 relativ zur Grundfläche 26 hat den Vorteil, dass Kräfte gleichmäßig über die Vorsprünge 30 verteilt zwischen dem Adapter 10 und der Schiene 52 übertragen werden.

In der Fig. 1D sind drei der vier Vorsprünge 30-1 bis 30-3 an der Oberseite 32 zu erkennen. In der Fig. 1E sind drei der vier Vorsprünge 30 an der Unterseite 34 zu erkennen.

Der Halteabschnitt 22 kann einen flaschenöffnerkopfähnlichen Körper 40 oder Ähnliches mit einer vorzugsweise vollständig umschlossenen Öffnung 42 aufweisen. In die Öffnung 42 können z.B. Kleiderbügel eingehängt werden.

Fig. 3 zeigt eine Schnittansicht durch eine Förderanlage 50, die zumindest einen Adapter 10 gemäß der Erfindung sowie eine Transport-Schiene 52 aufweist. In der Fig. 3 ist der Adapter 10 in Eingriff mit der Schiene 52 und wird senkrecht zur Zeichnungsebene bewegt.

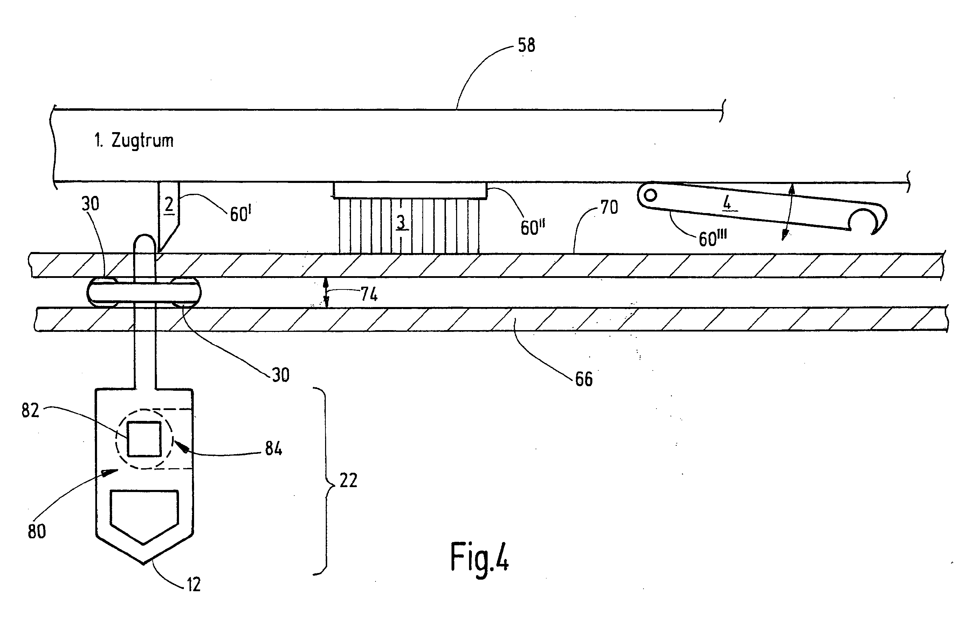

Die Schiene 52 kann ein Gehäuse 54 aufweisen. Die Schiene 52 kann ein Zugmittel 56 mit einem Zugtrum 58 umgeben. Am Zugtrum 58 sind Mitnehmer 60 angebracht (vgl. auch Seitenansicht der Fig. 4), die in Eingriff mit dem Mitnehmerabschnitt 16 des Adapters 10 gebracht werden.

Die Schiene 52 umfasst ferner zumindest ein erstes Profilelement 62, und vorzugsweise ein zweites Profilelement 64, die sich gegenüberliegend angeordnet sind, um den Grundkörper 24 des Gleitabschnitts 18 zwischen sich mit einem geringen Spiel aufzunehmen. Es versteht sich, dass das Gehäuse 54, das erste Profilelement 62 und/oder das zweite Profilelement 64 einstückig ausgebildet sein können. Das Gehäuse 54 kann auch weggelassen werden. Das Gehäuse 54 dient im Wesentlichen dem Schutz des Zugmittels 56, das das Zugtrum 58 und die Mitnehmer 60 aufweist, gegenüber der Umwelt. So kann verhindert werden, dass Mitarbeiter in das Zugmittel 56 greifen. Ferner kann verhindert werden, dass das Zugmittel 56 Umwelteinflüssen (wie z.B. Verschmutzung, Feuchtigkeit, etc.) ausgesetzt ist.

Das erste und zweite Profilelement 62 und 64 können symmetrisch angeordnet werden und identisch ausgebildet sein. Im vorliegenden Fall der Fig. 3 sind sie symmetrisch angeordnet und weisen zumindest einen L-förmigen Querschnitt auf. Die Profilelemente 62 und 64 weisen sogar einen U- bzw. C-förmigen Querschnitt auf. Die Querschnitte weisen mindestens einen ersten und zweiten Schenkel 66 und 68 auf. Bei der Fig. 3 weisen sie sogar einen dritten Schenkel 70 auf.

Das erste und zweite Profilelement 62 und 64 definieren einen Führungsspalt 72 zwischen sich, der so dimensioniert ist, dass der Führungsabschnitt 20 des Adapters 10 mit einem geringen Spiel in seitlicher Richtung (quer) zwischen den Profilelementen 62 und 64 in einer (Haupt-) Förderrichtung entlang der Schiene 52 bewegt werden kann, indem z.B. ein Mitnehmer 60 den Dorn 38 greift und entlang den Profilelementen 62 und 64 bewegt. Es versteht sich, dass das Zugmittel 56 vorzugsweise mit einem konstanten Abstand zu den Profilelementen 62 und 64 verläuft.

Die Abstände zwischen jeweiligen Schenkeln 66 und 70 sind so gewählt, dass der Grundkörper 24 inklusive seinen Vorsprüngen 30 mit einem geringen Spiel (in Längsrichtung) in dem so definierten Zwischenraum 74 (vgl. auch Fig. 4) in den Profilelementen 62 und 64 gleitend verschieblich gelagert ist. Der obere Schenkel 70 verhindert, dass ein Adapter 10 durch Verschwenken außer Eingriff mit dem Zugmittel 56 gebracht werden kann. Der Schenkel 70 kann aber auch weggelassen werden. Dann sind andere Vorkehrungen zu treffen, um ein Außer-Eingriff-Bringen des Adapters 10 mit dem Zugmittel 56 sicher zu verhindern.

Die Schenkel 66 der Profilelemente 62 und 64 dienen als Auflagefläche für die Vorsprünge 30 an der Unterseite 34 des Grundkörpers 24 des Gleitabschnitts 18. Die Schenkel 68 dienen als zeitliche Begrenzungsflächen für den Grundkörper 24. Die Schenkel 70 können als Anschlagsflächen für den Grundkörper 24 bzw. die Vorsprünge 30 an der Oberseite 32 des Grundkörpers 24 dienen, sofern diese vorhanden sind. Es versteht sich, dass die Adapter 10 nicht unbedingt auf der Schiene 52 aufliegen müssen. Sie können auch von unten an der Schiene 52 entlang gleiten.

Außerdem ist in den Figuren 3 und 4 ein optionaler Marker 80, wie z.B. ein RFID-Tag gezeigt, um die Adapter 10 eindeutig individualisieren zu können. Über die Marker 80 lassen sich Hängewaren, die an einem entsprechenden Adapter 10 hängen, eindeutig identifizieren. Diese Information ist für die Materialflusssteuerung, die z.B. in Form eines übergeordneten Zentralrechners implementiert sein kann, wichtig (Tracking).

Fig. 4 zeigt eine Seitenansicht der Förderanlage 50 der Fig. 3, wobei verschiedene, exemplarische Mitnehmer 60', 60" und 60'" gezeigt sind. Beim Mitnehmer 60' handelt es sich um einen Stift oder Ähnliches. Beim Mitnehmer 60" handelt es sich um eine Bürste. Beim Mitnehmer 60'" handelt es sich um einen schwenkbar am Zugtrum 58 gelagerten Haken. Andere Mitnehmertypen sind möglich. Der oder die Schenkel 66 stellen ein Lasttrum dar.

Der Marker 80 kann über eine Öffnung 84 in den Halteabschnitt 22 eingeführt werden. Alternativ kann einer der Abschnitte mit einem Strichcode oder Ähnlichem beklebt oder bedruckt werden, um ein "Tracking" zu ermöglichen.

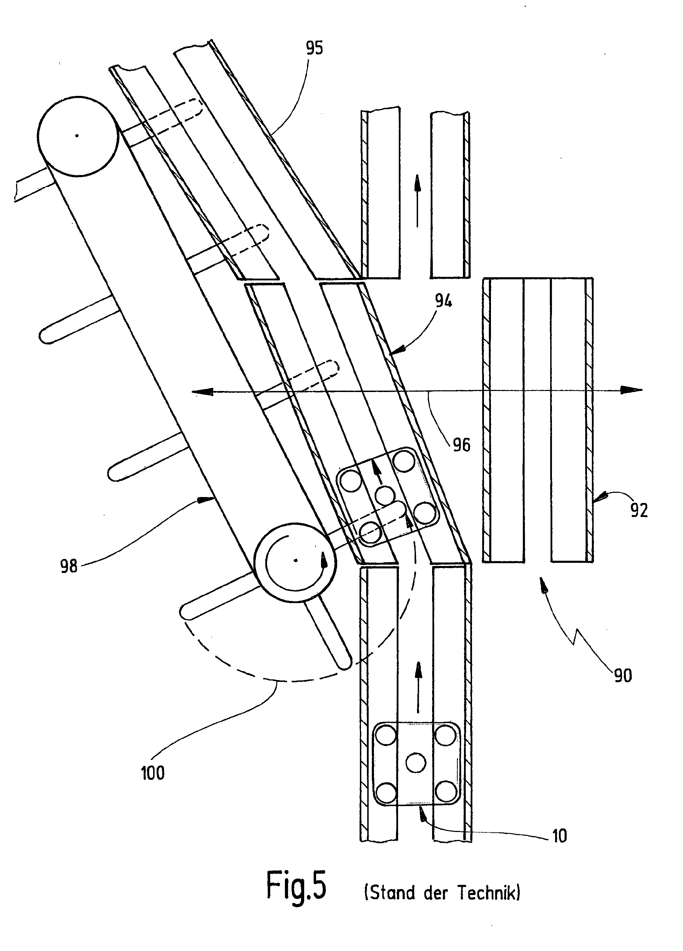

Fig. 5 zeigt eine Draufsicht auf eine herkömmliche Schiebeweiche 90, die mit Adaptern 10 gemäß der vorliegenden Erfindung betrieben wird. Die herkömmliche Schiebeweiche 90 ist dazu ausgelegt, mit herkömmlichen Roll-Adaptern zusammenzuwirken. Deshalb dürfen die Winkel zwischen einer Haupt-Schiene und einer Abzweigungsschiene nicht größer als z.B. 40° sein.

Die Schiebeweiche 90 der Fig. 5 umfasst zwei verschieblich gelagerte Schienenteile 92 und 94. Der erste Schienenteil 92 ist geradlinig ausgebildet und stellt einen Transport eines Adapters 10 in einer Haupt-Förderrichtung sicher. Das zweite Schienenteil 94 ist schräg zur Haupt-Förderrichtung orientiert und kann anstelle des ersten Schienenteils 92 in den Streckenverlauf ein- und ausgeschoben werden, wie es mit Hilfe eines Pfeils 96 angedeutet ist. Das zweite Schienenteil 94 schleust den Adapter 10 aus einer Hauptstrecke aus und schleust ihn in eine Abzweigung 95 ein.

Dem zweiten Schienenteil 94 kann ein (Finger-) Förderer 98 zugeordnet sein, der die Adapter 10 über- bzw. aufnimmt und sie an die Abzweigung 95 überführt. Der Förderer 98 ist so angeordnet, dass er mit dem Zugmittel 56 der Hauptstrecke nicht kollidiert. Der Umlauf des Förderers ist durch einen mit einer Strichlinie dargestellten Hilfskreis 100 angedeutet.

Fig. 6 zeigt eine Querverschiebungs-Weiche (nachfolgend auch kurz "Weiche" genannt) 110. Konkret handelt es sich um eine doppelte 90°-Weiche. Es versteht sich, dass jeder beliebige andere Winkel α zwischen einer Haupt-Förderrichtung 118 und einer Abzweigungsrichtung 119 bewerkstelligt werden kann. Dieser Winkel α ist vorzugsweise größer oder geich 90°. Außerdem versteht es sich, dass auch nur eine Abzweigung 112 oder 114 vorgesehen sein kann, wie es in der Fig. 6 mit Hilfe einer durchgezogenen Linie 116 angedeutet ist, so dass die Adapter 10 dann nur nach rechts in der Fig. 6 ausgeschleust werden.

Abzweigungen mit Winkeln α von größer oder gleich 90° sind insbesondere auf den runden Querschnitt des Führungsabschnitts 20 des Adapters 10 zurückzuführen.

Die in der Fig. 6 gezeigten Abzweigungen 112 und 114 unterbrechen den normalen geradlinigen Streckenverlauf, der durch die Profilelemente 62 und 64 definiert ist und der die Haupt-Förderrichtung 118 definiert.

Die (Doppel-)Weiche 110 umfasst vier Weichen-Profilelemente 111, die hinsichtlich ihres Querschnitts an die Querschnitte der angrenzenden Profilelemente 62 und 64 angepasst sind. Die Weichen-Profilelemente 111-1 bis 111-3 weisen Eckabschnitte 120 auf. Die Eckabschnitte 120 sind vorzugsweise abgerundet, um ein Einführen des Führungsabschnitts 20 in die Abzweigungen 112 und 114 zu erleichtern. Die Eckabschnitte 120 umschließen exemplarischen jeweils einen Winkel von 90°. Es versteht sich, dass die Eckabschnitte 120 auch andere Winkel umschließen können, um andere Abzweigungswinkel α zu erzeugen.

Ein Vorteil der Weiche 110 gegenüber der Weiche 90 ist, dass die Weichen-Profilelemente 111 nicht mehr gegenüber der Haupt-Strecke bewegt werden müssen. Die Weiche 110 ist in diesem Sinne statisch. Im Kreuzungsbereich der Führungsspalte 72 der Hauptstrecke und der Abzweigungen 112 und 114 können fördermittelartige Schiebeelemente (nicht dargestellt) vorgesehen sein, um ein Ablenken eines Adapters 10 aus der Haupt-Förderrichtung 118 zu bewirken. Andere Ausschleusmechanismen sind möglich. Wenn das Material des Adapters 10 z.B. elektrostatisch aufladbar ist, kann man mit einem elektrischen Feld eine Ausschleusung aus dem kontinuierlich angetriebenen Zugtrum 58 bewirken, vorausgesetzt die Mitnehmer 60 sind seitlich offen.

## Patentansprüche

1. Transport-Adapter (10) für eine Hängeförderanlage (50) mit einem Grundkörper (12), der derart ausgebildet ist, dass er ohne Rollen, gleitend auf einer Transport-Schiene (52) der Hängeförderanlage (50) mittels eines Zugmittels (56) bewegt werden kann;
wobei der Grundkörper (12) einen Gleitabschnitt (18), einen sich in Längsrichtung (14, 15) des Adapters (10) erstreckenden Führungsabschnitt (20) und einen Halteabschnitt (22) aufweist;
wobei der Gleitabschnitt (18) einen Gleitkörper (24) aufweist, der sich an den Führungsabschnitt (20) anschließt, der quer zum Führungsabschnitt (20) orientiert ist und der derart dimensioniert ist, dass der Adapter (10), wenn er in die Schiene (52) eingeführt ist, verliersicher und gleitend auf der Schiene (52) beweglich ist;
**dadurch gekennzeichnet, dass** der Grundkörper (12) einen Mitnehmerabschnitt (16) aufweist, der angepasst ist, mit dem Zugmittel (56) derart zusammenzuwirken, dass der Mitnehmerabschnitt (16) und das Zugmittel (56), zum Zwecke einer Bewegung des Adapters (10) in der Schiene (52), miteinander in Eingriff kommen, wobei die Bewegung entlang einer Haupt-Förderrichtung (118) und quer dazu erfolgen kann;
wobei der Führungsabschnitt (20) zylinderförmig mit einer runden Grundfläche (28) ausgebildet ist, wobei eine Größe der Grundfläche (28) derart an einen Führungsspalt (72) der Schiene (52) angepasst ist, dass der Führungsabschnitt (20) in Querrichtung einen Minimalabstand zu dem Führungsspalt (72) aufweist; und
wobei der Gleitkörper (24) eine Oberseite (32), die dem Mitnehmerabschnitt (16) zugewandt ist und eine Unterseite (34), die dem Führungsabschnitt (20) zugewandt ist, aufweist, und wobei die Oberseite (32) und die Unterseite (34) zur gleitend verschieblichen Lagerung in einem Zwischenraum (74) in Profilelementen (62, 64) der Schiene (52) ausgebildet sind,
wobei der Grundkörper (12) einstückig ausgebildet ist.

2. Transport-Adapter nach Anspruch 1, wobei sich der Mitnehmerabschnitt (16) in der Längsrichtung (14, 15) erstreckt, sich an den Gleitabschnitt (18) an-schließt und vorzugsweise eine Fortsetzung des Führungsabschnitts (20) darstellt, die durch den Gleitabschnitt (18) unterbrochen ist.

3. Transport-Adapter nach Anspruch 1 oder 2, wobei der Gleitkörper (24) eine im Wesentlichen rechteckige Grundfläche (26) aufweist.

4. Transport-Adapter nach einem der Ansprüche 1 bis 3, wobei der Gleitkörper (24) eine umlaufende Randfläche (36) aufweist, die die Oberseite (32) mit der Unterseite (34) verbindet, wobei die Unterseite (34) und/oder die Oberseite (32) jeweils mindestens einen Vorsprung (30) aufweist, der sich im Wesentlichen in der Längsrichtung (14, 15) erstreckt.

5. Transport-Adapter nach Anspruch 4, wobei mehrere Vorsprünge (30) vorgesehen sind, die relativ zur Grundfläche (26) des Gleitkörpers (24), vorzugsweise homogen, um eine jeweilige Verbindung zwischen dem Gleitabschnitt (18), dem Führungsabschnitt (20) und/oder dem Mitnehmerabschnitt (16) verteilt angeordnet sind.

6. Transport-Adapter nach Anspruch 4 oder 5, wobei die Randfläche (36) derart ausgebildet ist, dass mehrere Adapter (10), die in der Schiene (52) hintereinander angeordnet sind und aneinander anschlagen, sich gegenseitig weiterbewegen können.

7. Transport-Adapter nach einem der Ansprüche 1 bis 6, wobei der Grundkörper (12) aus einem Kunststoff, vorzugsweise mit Teflonzusätzen, spritzgegossen ist.

8. Transport-Adapter nach Anspruch 7, wobei der Kunststoff einen Gleitwert von 0,1 bis 0,3, vorzugsweise von 0,2, aufweist.

9. Hängeförderanlage (50) mit mindestens einem Transport-Adapter (10) nach einem der Ansprüche 1 bis 8, mit einer Transport-Schiene (52), die zur gleitenden Aufnahme des mindestens einen Adapters (10) eingerichtet, und mit einem Zugmittel (56), das eingerichtet ist, mit dem Mitnehmerabschnitt (16) des mindestens einen Adapters (10), zum Zecke eines Transports des mindestens einen Adapters (10) in der Schiene (52), in Eingriff zu kommen, wobei die Schiene (52) ein erstes Profilelement (62) und ein zweites Profilelement (64) aufweist, um einen Führungsspalt (72) zu definieren, der zur Aufnahme des Führungsabschnitts (20) des mindestens einen Adapters (10) geeignet ist, so dass der Gleitabschnitt (18) auf der Schiene (52) zum gleitenden Aufliegen kommt.

10. Hängeförderanlage nach Anspruch 9, wobei jedes Profilelement (62, 64) zumindest einen L-förmigen Querschnitt aufweist, der zur Auflage und seitlichen Führung des Gleitabschnitts (18) des mindestens einen Adapters (10) eingerichtet ist, wobei der L-förmige Querschnitt einen weiteren Schenkel (70) aufweist, so dass der Querschnitt U-förmig ist, wobei der weitere Schenkel (70) derart zu einem Auflageschenkel (66) beabstandet (74) ist, dass der Gleitkörper (24) des mindestens einen Adapters (10) mit einem geringen Spiel in einen durch die Schenkel (66, 70) definierten Zwischenraum (76) passt, so dass der Gleitkörper (24) mit geringer Reibung auf oder in der Schiene (52) beweglich ist.

11. Hängeförderanlage nach Anspruch 9 oder 10, wobei die Schiene (52) derart ausgebildet ist, dass sie das Zugmittel (56) und jedes Profilelement (62, 64) umschließt, so dass von dem mindestens einen Adapter (10) höchstens der Führungsabschnitt (20) und der Halteabschnitt (22) aus der Schiene (52) hervorsteht, wenn sich der Adapter (10) in der Schiene (52) befindet.

12. Hängeförderanlage nach einem der Ansprüche 9 bis 11, der ferner ein Leeradaptermagazin aufweist, dass derart ausgebildet ist, dass ungenutzte Adapter (10), die zeitweilig nicht zum hängenden Transport von Objekten benötigt werden, ungeordnet in das Magazin fallen, sobald sie die Schiene (52) verlassen.

13. Hängeförderanlage (50) gemäß einem der Ansprüche 9 bis 12, mit einer Querverschiebungs-Weiche (110), wobei die Weiche (110) mindestens ein erstes, zweites und drittes Weichen-Profilelement (111) aufweist, deren Querschnitte mit dem Querschnitt jedes entsprechenden Profilelements (62, 64) der restlichen Schiene (52) übereinstimmt, wobei mindestens zwei der Weichen-Profilelemente (111) aufeinander abgestimmte Eckabschnitte (120-1, 120-2) aufweisen, die derart ausgebildet sind, dass der mindestens eine Adapter (10) direkt in einen abzweigenden Ast (112, 114) der Schiene (52) verschiebbar ist, wobei die Weichen-Profilelemente (111) am Ort der Weiche (110) fest montiert sind.

## Claims

1. A transport adapter (10) for an overhead conveyor system (50) having a base body (12) formed such that the base body can be moved, without rollers, in a sliding manner on a transport rail (52) of the overhead conveyor system (50) by means of traction means (56);
wherein the base body (12) comprises a sliding section (18), a guiding section (20) extending along a longitudinal direction (14, 15) of the adapter (10), and a holding section (22), wherein the sliding section (18) has a sliding body (24) adjacent to the guiding section (20), which sliding body (24) is orientated transversely to the guiding section (20) and dimensioned such that the adapter (10), if inserted into the rail (52), is captive and slidingly moveable on the rail (52),
**characterized in that** the base body (12) comprises a driver section (16), which is adapted to interact with the traction means (56) such that the driver section (16) and the traction means (56) are in engagement for moving the adapter (10) in the rail (52), wherein the movement can occur along a main-conveying direction (118) as well as transversely thereto;
wherein the guiding section (20) is cylindrical having a round base area (28), wherein a size of the base area (28) is adapted to a guiding slot (72) of the rail (52) such that the guiding section (20) has a minimal distance relative to the guiding slot (72) in transverse direction; and
wherein the sliding body (24) comprises a top side (32) facing the driver section (16), and a bottom side (34) facing the guiding section (20), and wherein the top side (32) and the bottom side (34) are formed for being slidingly and displaceably supported in an interstice (74) of profile elements (62, 64) of the rail (52),
wherein the base body (12) is formed integrally.

2. The transport adapter of claim 1, wherein the driver section (16) extends in the longitudinal direction (14, 15), is arranged adjacent to the sliding section (18), and preferably represents a continuation of the guiding section (20) being interrupted by the sliding section (18).

3. The transport adapter of claim 1 or 2, wherein the sliding body (24) comprises a substantially rectangular base area (26).

4. The transport adapter of one of claims 1 to 3, wherein the sliding body (24) comprises a circumferential edge area (36), which connects the top side (32) to the bottom side (34), wherein the bottom side (34) and/or the top side (32) respectively comprise at least one projection (30) extending substantially in the longitudinal direction (14, 15).

5. The transport adapter of claim 4, wherein a number of projections (30) are provided, which are distributed, relative to the base area (26) of the sliding body (24), around a respective connection between the sliding section (18), the guiding section (20), and/or the driver section (16), preferably in a homogenous manner.

6. The transport adapter of claim 4 or 5, wherein the edge area (36) is formed such that a number of adapters (10) can mutually move each other forward, the adapters being arranged one after the other in the rail (52) and abutting against each other.

7. The transport adapter of one of claims 1 to 6, wherein the base body (12) is made by injection molding plastic, preferably including Teflon additives.

8. The transport adapter of claim 7, wherein the plastic has a sliding value of 0.1 to 0.3, preferably of 0.2.

9. An overhead conveyor system (50) comprising at least one transport adapter (10) of one of claims 1 to 8, and further comprising a transport rail (52) adapted for slidingly receiving the at least one adapter (10), and a traction means (56) adapted to engage the driver section (16) of the at least one adapter (10) for the purpose of transporting the at least one adapter (10) in the rail (52), wherein the rail (52) comprises a first profile element (62) and a second profile element (64) for defining a guiding slot (72) which is suitable for receiving the guiding section (20) of the at least one adapter (10) so that the sliding section (18) is slidingly supported on the rail (52).

10. The overhead conveyor system of claim 9, wherein each of the profile elements (62, 64) comprises at least one L-shaped cross section adapted to support and laterally guide the sliding section (18) of the at least one adapter (10), wherein the L-shaped cross section comprises an additional leg (70) so that the cross section has a U-shape, wherein the additional leg (70) is distanced to the support leg (66) such that the sliding body (24) of the at least one adapter (10) fits, with little clearance, into an interstice (76) defined by the legs (66, 70) so that the sliding body (24) is moved on or in the rail (52) at low friction.

11. The overhead conveyor system of claim 9 or 10, wherein the rail (52) is formed such that the traction means (56) and each of the profile elements (62, 64) is surrounded by the rail (52) so that at most the guiding section (20) and the holding section (22) of the at least one adapter (10) protrude from the rail (52), if the adapter (10) is located in the rail (52).

12. The overhead conveyor system of one of claims 9 to 11, further comprising an empty-adapter magazine formed such that non-used adapters (10), which are temporarily not required for the overhead transport of objects, fall chaotically into the magazine as soon as they leave the rail (52).

13. The overhead conveyor system (50) of one of claims 9 to 12 having a transversedisplacement switch (110), wherein the switch (110) comprises at least first, second and third switch profile elements (111), the cross sections of which correspond to the cross section of each corresponding profile element (62, 64) of the remaining rail (52), wherein at least two of the switch profile elements (111) comprise corner sections (120-1, 120-2), which are adapted to each other and which are formed such that the at least one adapter (10) is displaceable directly into a branching-off branch (112, 114) of the rail (52), wherein the switch profile elements (111) are mounted fixedly at the location of the switch (110).

## Revendications

1. Adaptateur de transport (10) pour une installation de convoyeur suspendu (50) comprenant un corps de base (12) qui est réalisé de telle sorte qu'il puisse être déplacé sans rouleaux, en glissant sur un rail de transport (52) de l'installation de convoyeur suspendu (50) au moyen d'un moyen de traction (56) ;
le corps de base (12) présentant une portion de glissement (18), une portion de guidage (20) s'étendant dans la direction longitudinale (14, 15) de l'adaptateur (10) et une portion de retenue (22) ;
la portion de glissement (18) présentant un corps de glissement (24), lequel se raccorde à la portion de guidage (20), est orienté transversalement par rapport à la portion de guidage (20) et est dimensionné de telle sorte que l'adaptateur (10), lorsqu'il est guidé dans le rail (52), puisse se déplacer de manière imperdable et en glissant sur le rail (52) ;
**caractérisé en ce que** le corps de base (12) présente une portion d'entraînement (16) qui est prévue pour coopérer avec le moyen de traction (56) de telle sorte que la portion d'entraînement (16) et le moyen de traction (56) puissent venir en prise l'un avec l'autre dans le but de permettre un déplacement de l'adaptateur (10) dans le rail (52), le déplacement pouvant s'effectuer le long d'une direction de transport principal (118) et transversalement à celle-ci ;
la portion de guidage (20) étant réalisée sous forme cylindrique avec une surface de base circulaire (28), une taille de la surface de base (28) étant adaptée à une fente de guidage (72) du rail (52) de telle sorte que la portion de guidage (20) présente, dans la direction transversale, une distance minimale à la fente de guidage (72) ; et le corps de glissement (24) présentant un côté supérieur (32) qui est tourné vers la portion d'entraînement (16) et un côté inférieur (34) qui est tourné vers la portion de guidage (20) et le côté supérieur (32) et le côté inférieur (34) étant réalisés en vue d'un support déplaçable par glissement dans un espace intermédiaire (74) dans des éléments profilés (62, 64) du rail (52),
le corps de base (12) étant réalisé d'une seule pièce.

2. Adaptateur de transport selon la revendication 1, dans lequel la portion d'entraînement (16) s'étend dans la direction longitudinale (14, 15), se raccorde à la portion de glissement (18) et constitue de préférence un prolongement de la portion de guidage (20) qui est interrompu par la portion de glissement (18).

3. Adaptateur de transport selon la revendication 1 ou 2, dans lequel le corps de glissement (24) présente une surface de base essentiellement rectangulaire (26).

4. Adaptateur de transport selon l'une quelconque des revendications 1 à 3, dans lequel le corps de glissement (24) présente une surface de bord périphérique (36) qui relie le côté supérieur (32) au côté inférieur (34), le côté inférieur (34) et/ou le côté supérieur (32) présentant à chaque fois au moins une saillie (30), laquelle s'étend essentiellement dans la direction longitudinale (14, 15).

5. Adaptateur de transport selon la revendication 4, dans lequel plusieurs saillies (30) sont prévues, lesquelles sont disposées par rapport à la surface de base (26) du corps de glissement (24), de manière répartie de préférence de manière homogène autour d'une connexion respective entre la portion de glissement (18), la portion de guidage (20) et/ou la portion d'entraînement (16).

6. Adaptateur de transport selon la revendication 4 ou 5, dans lequel la surface de bord (36) est réalisée de telle sorte que plusieurs adaptateurs (10), qui sont disposés les uns derrière les autres dans le rail (52) et qui sont en aboutement les uns contre les autres, puissent continuer de se déplacer les uns par rapport aux autres.

7. Adaptateur de transport selon l'une quelconque des revendications 1 à 6, dans lequel le corps de base (12) est moulé par injection de plastique, de préférence d'additifs à base de téflon.

8. Adaptateur de transport selon la revendication 7, dans lequel le plastique présente un coefficient de glissement de 0,1 à 0,3, de préférence de 0,2.

9. Installation de convoyeur suspendu (50) comprenant au moins un adaptateur de transport (10) selon l'une quelconque des revendications 1 à 8, comprenant un rail de transport (52) qui est prévu pour recevoir par glissement l'au moins un adaptateur (10), et comprenant un moyen de traction (56) qui est prévu pour venir en prise avec la portion d'entraînement (16) de l'au moins un adaptateur (10) dans le but de permettre un transport de l'au moins un adaptateur (10) dans le rail (52), le rail (52) présentant un premier élément profilé (62) et un deuxième élément profilé (64), afin de définir une fente de guidage (72) qui est appropriée pour recevoir la portion de guidage (20) de l'au moins un adaptateur (10), de sorte que la portion de glissement (18) vienne s'appliquer par glissement sur le rail (52).

10. Installation de convoyeur suspendu selon la revendication 9, dans laquelle chaque élément profilé (62, 64) présente au moins une section transversale en forme de L, qui est prévue pour supporter et guider latéralement la portion de glissement (18) de l'au moins un adaptateur (10), la section transversale en forme de L présentant une branche supplémentaire (70), de sorte que la section transversale soit en forme de U, la branche supplémentaire (70) étant espacée (74) d'une branche d'appui (66) de telle sorte que le corps de glissement (24) de l'au moins un adaptateur (10) s'adapte avec un faible jeu dans un espace intermédiaire (76) défini par les branches (66, 70), de sorte que le corps de glissement (24) puisse être déplacé avec faible friction sur ou dans le rail (52).

11. Installation de convoyeur suspendu selon la revendication 9 ou 10, dans lequel le rail (52) est réalisé de telle sorte qu'il entoure le moyen de traction (56) et chaque élément profilé (62, 64), de sorte que tout au plus la portion de guidage (20) et la portion de retenue (22) de l'au moins un adaptateur (10) fassent saillie hors du rail (52) lorsque l'adaptateur (10) se trouve dans le rail (52).

12. Installation de convoyeur suspendu selon l'une quelconque des revendications 9 à 11, qui présente en outre un magasin d'adaptateurs vides qui est réalisé de telle sorte que des adaptateurs non utilisés (10) qui ne sont temporairement pas requis pour le transport suspendu d'objets tombent en désordre dans le magasin dès qu'ils quittent le rail (52).

13. Installation de convoyeur suspendu (50) selon l'une quelconque des revendications 9 à 12, comprenant un aiguillage de déplacement transversal (110), l'aiguillage (110) présentant au moins un premier, deuxième et troisième élément profilé d'aiguillage (111), dont les sections transversales coïncident avec la section transversale de chaque élément profilé correspondant (62, 64) du reste du rail (52), au moins deux des éléments profilés d'aiguillage (111) présentant des portions de coin adaptées les unes aux autres (120-1, 120-2), qui sont réalisées de telle sorte que l'au moins un adaptateur (10) puisse être déplacé directement dans une branche de dérivation (112, 114) du rail (52), les éléments profilés d'aiguillage (111) étant montés fixement à l'emplacement de l'aiguillage (110).
